# EUROPEAN PATENT APPLICATION

(11) **EP 3 527 924 A1**
(43) Date of publication of application: **21.08.2019**
(21) Application number: 17860148.0
(22) Date of filing: 11.10.2017
(51) Int. Cl.: F28F 19/00, B01J 19/00, F28F 1/00, F28F 3/00

(54) **THERMAL TREATMENT DEVICE**

(30) Priority: 13.10.2016 JP 2016201661
(71) Applicant: IHI Corporation, Tokyo 135-8710 (JP)
(72) Inventor: YAMAMOTO, Taiga, Tokyo 135-8710 (JP); YANO, Akihisa, Tokyo 135-8710 (JP); OKA, Tatsuya, Tokyo 135-8710 (JP); MIYAJIMA, Shunji, Tokyo 135-8710 (JP); SAKAKURA, Shigeki, Tokyo 135-8710 (JP); AKITA, Takahito, Tokyo 135-8710 (JP); SHIBUYA, Hideshi, Tokyo 135-8710 (JP); TAKEUCHI, Yusuke, Tokyo 135-8710 (JP)
(74) Representative: Lamb, Martin John Carstairs
(86) International application number: PCT/JP2017/036825
(87) International publication number: WO 2018/070427

(57) **Abstract**

A heat treatment device (1) causing a first fluid and a second fluid to flow therethrough includes heat transfer bodies (7, 9) including first flow channels (17) through which the first fluid flows and second flow channels (31) through which the second fluid flows adjacent to the first flow channels (17) without contact, and pipe-like members (60) detachably placed in the first flow channels (17) and each including a pipe wall (60a) having an outer wall surface (60a₁) conforming to a wall surface defining each first flow channel (17) and an inner wall surface (60a₂) with which the first fluid comes into contact.

## Description

### TECHNICAL FIELD

The present disclosure relates to a heat exchanger-type heat treatment device.

### BACKGROUND ART

Heat exchanger-type reactors heat or cool, using a heat medium, a reaction fluid in a gas or liquid state containing a reaction raw material as a reactant so as to promote a reaction of the reactant. Such a reactor is provided with reaction channels through which a reaction fluid flows, and heat medium channels through which a heat medium flows. Heat exchange between the reaction fluid and the heat medium proceeds during a period from the introduction to the discharge of the reaction fluid and the heat medium through the respective channels. Japanese Translation of PCT International Application Publication No. 2007-534457 (Patent Document 1) discloses an apparatus including a heat exchanger including heat exchange channels serving as heat medium channels, and process microchannels serving as reaction channels and stacked on the heat exchanger.

### CITATION LIST

### PATENT LITERATURE

Patent Document 1: Japanese Translation of PCT International Application Publication No. 2007-534457

### SUMMARY OF THE INVENTION

Heat transfer bodies forming the reaction channels are typically made of metal such as stainless steel. A reaction fluid sometimes has corrosiveness. When a reactor is continuously used for a long period of time such as about 15 years, for example, the heat transfer bodies forming the reaction channels become thinner because of corrosion. When the heat transfer bodies are designed, the dimensions of the respective parts in the heat transfer bodies, in particular the dimensions between the channels, are determined including a margin of corrosion depending on a duration of life of the heat transfer bodies presumed. As the margin of corrosion is increased, the distance between the respective channels is increased, leading to an increase in size of the entire heat transfer bodies. The increase in size should be avoided since costs are increased or heat exchange performance is decreased, due to the increased distance between the respective channels. The apparatus disclosed in Japanese Translation of PCT International Application Publication No. 2007-534457 does not take any measures taking account of such a margin of corrosion.

An object of the present disclosure is to provide a heat treatment device capable of avoiding an increase in cost or a decrease in heat exchange performance derived from an increase in thickness between channels.

An aspect of the present disclosure is a heat treatment device causing a first fluid and a second fluid to flow therethrough which includes a heat transfer body including a first flow channel through which the first fluid flows and a second flow channel through which the second fluid flows adjacent to the first flow channel without contact, and a pipe-like member detachably placed in the first flow channel and including a pipe wall having an outer wall surface conforming to a wall surface defining the first flow channel and an inner wall surface with which the first fluid comes into contact.

The present disclosure can provide a heat treatment device capable of avoiding an increase in cost or a decrease in heat exchange performance derived from an increase in thickness between channels.

### BRIEF DESCRIPTION OF DRAWINGS

FIG. 1 is a diagram showing a structure of a reactor according to an embodiment of the present disclosure.
FIG. 2 is a diagram showing a structure and a shape of a part including a first heat transfer body.
FIG. 3 is a diagram showing a structure and a shape of a part including a second heat transfer body.
FIG. 4 is a diagram showing a shape of a pipe-like member according to the embodiment.
FIG. 5A is a diagram showing a state of arrangement of the pipe-like members when each projection is viewed in the Y direction.
FIG. 5B is a diagram showing a state of arrangement of the pipe-like members when each pipe wall is cross-sectioned in a direction perpendicular to the Y direction.
FIG. 6A is a diagram showing a first arrangement example of the pipe-like member in a first channel.
FIG. 6B is a diagram showing a second arrangement example of the pipe-like member in the first channel.
FIG. 6C is a diagram showing a third arrangement example of the pipe-like member in the first channel.
FIG. 7 is a diagram for illustrating the effects due to the pipe-like members according to the embodiment.

### DESCRIPTION OF EMBODIMENTS

Embodiments according to the present disclosure will be described in detail below with reference to the drawings. The following dimensions, materials, and specific numerical values described in the embodiments are shown for illustration purposes only, and the present disclosure is not limited thereto unless otherwise specified. The elements having substantially the same functions and structures illustrated in the description and the drawings are designated by the same reference numerals, and overlapping explanations are not repeated below. The elements described below but not related directly to the present disclosure are not shown in the drawings. In the following explanations of the drawings, a vertical direction is defined as a Z-axis, an extending direction of reaction regions in the first and second reaction channels described below on a plane perpendicular to the Z-axis is defined as a Y-axis, and a direction perpendicular to the Y-axis is defined as an X-axis.

A heat treatment device according to the present disclosure causes a first fluid and a second fluid to flow therethrough to utilize heat exchange between the first fluid and the second fluid. The heat treatment device according to the present embodiment is illustrated with a case of a heat exchanger-type reactor. A reaction fluid and a product produced by a reaction correspond to the first fluid, and a heat medium corresponds to the second fluid. The present disclosure may also be applicable to a case of a heat treatment device such as a heat exchanger.

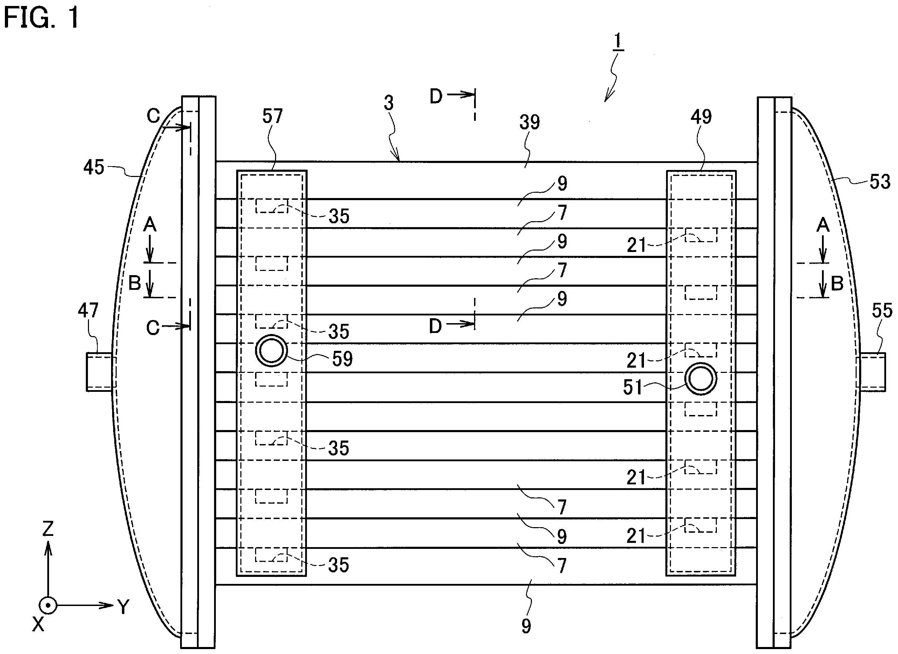

FIG. 1 is a side view showing a structure of a reactor 1 according to the present embodiment. The reactor 1 includes a heat exchange unit 3 as a main body for executing reaction processing. The reactor 1 heats or cools a reaction fluid in a gas state or in a liquid state containing a reaction raw material as a reactant so as to promote the reaction of the reactant.

The heat exchange unit 3 includes a plurality of first heat transfer bodies 7 including reaction channels through which a reaction fluid and a product flow, a plurality of second heat transfer bodies 9 including heat medium channels through which a heat medium flows, and a lid body 39. The heat exchange unit 3 has a counter flow-type structure in which the reaction fluid or the product and the heat medium flow in directions opposite to each other. The first heat transfer bodies 7, the second heat transfer bodies 9, and the lid body 39 are each a plate-like member made of a heat transfer material having thermal resistance.

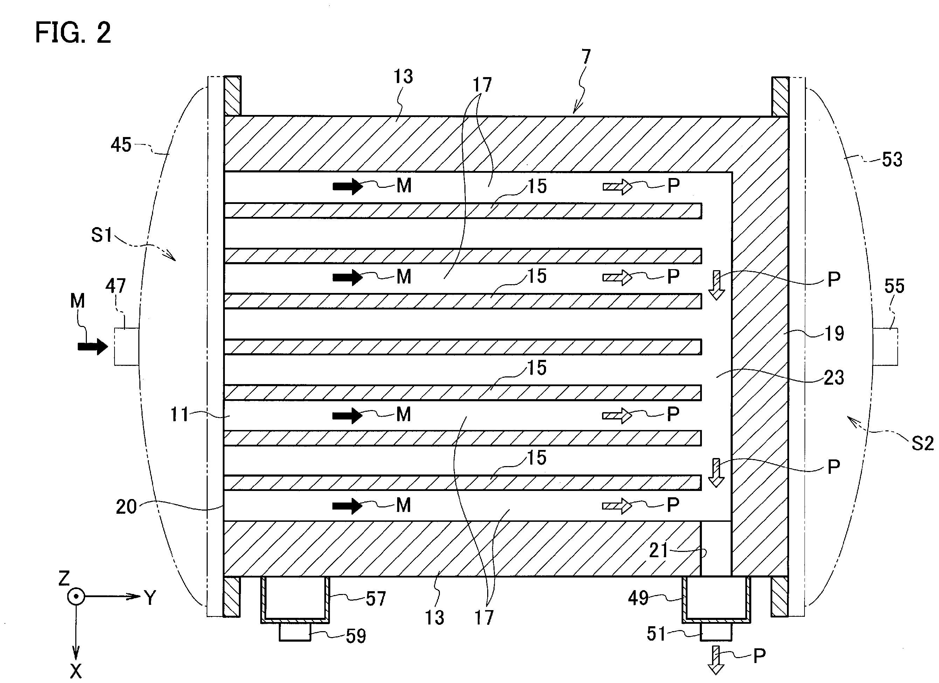

FIG. 2 is a plan view corresponding to a view taken along line A-A in FIG. 1 and showing a structure and a shape of a part including the first heat transfer body 7. Each of the first heat transfer bodies 7 includes a plurality of first flow channels 17 serving as reaction channels including reaction regions. The first flow channels 17 include the reaction regions in the middle portions thereof. The first flow channels 17 receive heat or cooled air supplied from the heat medium flowing through second flow channels in the second heat transfer bodies 9 described below to cause the heat or cooled air to react with the reaction fluid M, so as to produce a product P. Each of the first flow channels 17 is a groove having an open first side surface on one side of the respective first heat transfer bodies 7 with the upper side open in the Z direction. The first flow channels 17 extend straight from first introduction ports 20 from which the reaction fluid M is introduced to a portion immediately in front of a second side surface on the other side of the respective first heat transfer bodies 7 in the Y direction. The first flow channels 17 each have a rectangular shape in cross section. The first flow channels 17 are arranged at regular intervals in the X direction.

The first heat transfer bodies 7 each include a first base 11, two first side walls 13, a plurality of first interposition walls 15, and a first partition wall 19. The first base 11 is a rectangular plate wall portion covering the entire X-Y plane of the respective first heat transfer bodies 7. The first side walls 13 are wall portions provided on both right and left sides of the extending direction of the first flow channels 17 on one of the main surfaces of the first base 11 perpendicular to the Z direction. The respective interposition walls 15 are wall portions interposed between the two first side walls 13 on one of the main surfaces of the first base 11 and arranged at regular intervals in parallel to the first side walls 13. The first partition wall 19 extends in the X direction orthogonal to the extending direction of the first flow channels 17 on the second side surface side on one of the main surfaces of the first base 11. If the first flow channels 17 extend to the second side surface, the first flow channels 17 would reach a second space S2 described below in which the heat medium HC is introduced. The provision of the first partition wall 19 changes the flowing direction of the product P passing through the respective first flow channels 17. The height of each of the first side walls 13, the first interposition walls 15, and the first partition wall 19 is the same.

The first heat transfer bodies 7 each include a first communication flow channel 23 extending along the inner surface of the first partition wall 19. The first communication flow channel 23 communicates with all of the first flow channels 17, and also communicates at one end with a first discharge port 21 provided at one of the first side walls 13 so as to discharge the product P to the outside of the respective first heat transfer bodies 7. Although the first communication flow channel 23 is indicated separately from the first flow channels 17, for illustration purposes, the first communication flow channel 23 and the first flow channels 17 are the same kind of channels having different names but the same function to allow the reaction fluid M and the product P to flow therethrough. FIG. 2 illustrates a case in which all of the fluids flowing through the first flow channels 17 and led to the first discharge port 21 are indicated as the product P, but the fluids actually may include the reaction fluid M not used for the reaction.

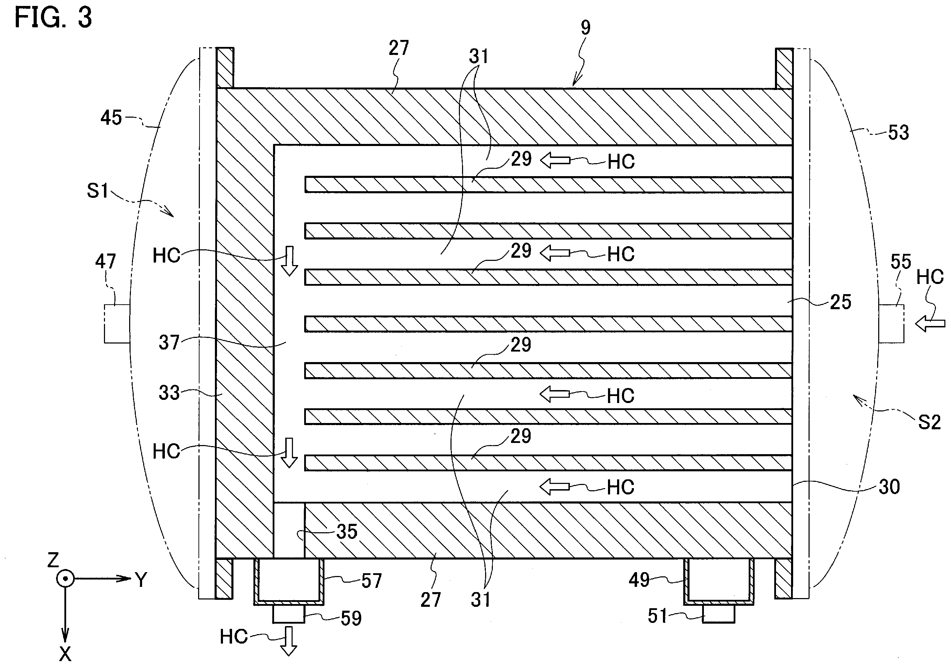

FIG. 3 is a plan view corresponding to a view taken along line B-B in FIG. 1 and showing a structure and a shape of a part including the second heat transfer body 9. Each of the second heat transfer bodies 9 includes a plurality of second flow channels 31 serving as heat medium channels. The second flow channels 31 supply heat or cooled air supplied from the heat medium HC to the outside, namely, to the first heat transfer bodies 7. Each of the second flow channels 31 is a groove having an open first side surface on one side of the respective second heat transfer bodies 9 with the upper side open in the Z direction. The second flow channels 31 extend straight from second introduction ports 30 from which the heat medium HC is introduced to a portion immediately in front of a second side surface on the other side of the second heat transfer bodies 9 in the Y direction. The second flow channels 31 each have a rectangular shape in cross section. The first side surface of the respective second heat transfer bodies 9 is located on the opposite side of the first side surface of the respective first heat transfer bodies 7 described above in the Y direction. The second flow channels 31 are arranged at regular intervals in the X direction, as in the case of the first flow channels 17. Although not shown, the second flow channels 31 may each be provided with a heat transfer promoting body for increasing the contact area with the heat medium to promote heat transfer between the heat medium and the respective second heat transfer bodies 9.

The second heat transfer bodies 9 each include a second base 25, two second side walls 27, a plurality of second interposition walls 29, and a second partition wall 33. The second base 25 is a rectangular plate wall portion covering the entire X-Y plane of the respective second heat transfer bodies 9. The second side walls 27 are wall portions provided on both right and left sides of the extending direction of the second flow channels 31 on one of the main surfaces of the second base 25 perpendicular to the Z direction. The respective interposition walls 29 are wall portions interposed between the two second side walls 27 on one of the main surfaces of the second base 25 and arranged at regular intervals in parallel to the second side walls 27. The second partition wall 33 extends in the X direction orthogonal to the extending direction of the second flow channels 31 on the second side surface side on one of the main surfaces of the second base 25. If the second flow channels 31 extend to the second side surface, the second flow channels 31 would reach a first space S1 described below in which the reaction fluid M is introduced. The provision of the second partition wall 33 changes the flowing direction of the heat medium HC passing through the respective second flow channels 31. The height of each of the second side walls 27, the second interposition walls 29, and the second partition wall 33 is the same.

The second heat transfer bodies 9 each include a second communication flow channel 37 extending along the inner surface of the second partition wall 33. The second communication flow channel 37 communicates with all of the second flow channels 31. The second communication flow channel 37 communicates at one end with a second discharge port 35 provided at one of the second side walls 27 so as to discharge the heat medium HC to the outside of the respective second heat transfer bodies 9.

As shown in FIG. 1, the heat exchange unit 3 is fabricated as a connected body or a stacked body such that the lid body 39 is arranged on the uppermost side in the Z direction, and the second heat transfer bodies 9 and the first heat transfer bodies 7 are alternatively connected to and stacked with each other below the lid body 39. The first flow channels 17 of the respective first heat transfer bodies 7 and the second flow channels 31 of the respective second heat transfer bodies 9 are arranged adjacent to each other without contact via the first base 11 or the second base 25. When the heat exchange unit 3 is assembled, the respective members are fixed to each other by a bonding method such as tungsten inert gas (TIG) welding or diffusion bonding, so as to suppress a reduction in heat transfer derived from poor contact between the respective members.

The heat transfer material used for the respective elements included in the heat exchange unit 3 is preferably thermally-resistant metal such as an iron alloy or a nickel alloy. More particularly, the thermally-resistant alloy may be an iron alloy such as stainless steel, or a nickel alloy such as Inconel alloy 625 (registered trademark), Inconel alloy 617 (registered trademark), and Haynes alloy 230 (registered trademark). These heat transfer materials are preferable because such alloys have durability or corrosion resistance with respect to combustion gas which may be used for promoting the reaction in the first flow channels 17 or used as a heat medium. However, the present embodiment is not limited to these materials. Alternatively, the heat transfer material may be iron-based plated steel, metal covered with thermally-resistant resin such as fluororesin, or carbon graphite.

Although the heat exchange unit 3 may be composed of at least a pair of one first heat transfer body 7 and one second heat transfer body 9, a larger number of the respective heat transfer bodies can improve the heat exchange performance. The number of the first flow channels 17 provided in each first heat transfer body 7 and the number of the second flow channels 31 provided in each second heat transfer body 9 may be determined as appropriate and may be changed in view of the designing conditions or heat transfer efficiency of the heat exchange unit 3. Although the heat exchange unit 3 according to the present embodiment itself serves as a main body of the reactor 1, the heat exchange unit 3 may be covered with a housing or surrounded by a heat insulator so as to avoid heat radiation to prevent heat loss.

The reactor 1 includes a plurality of pipe-like members detachably placed in the respective first flow channels 17.

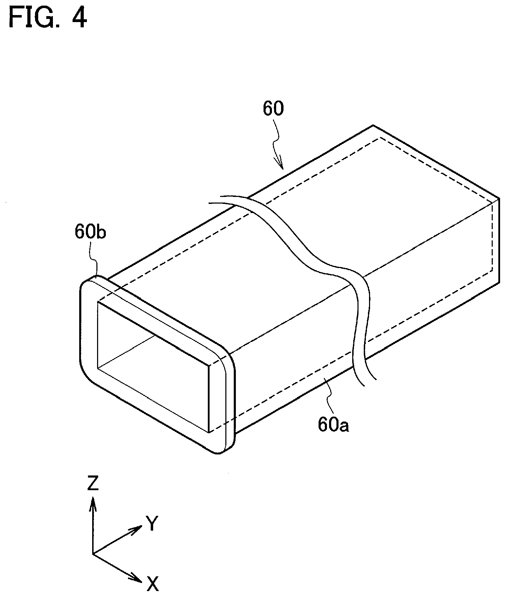

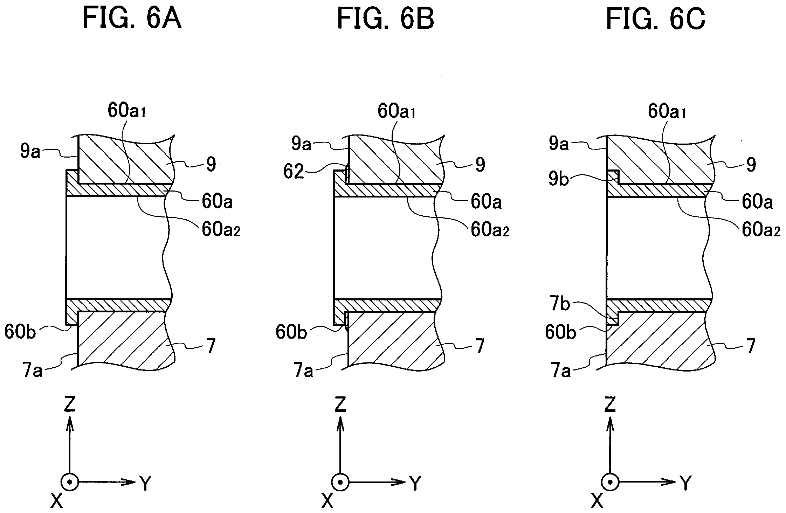

FIG. 4 is a perspective view showing a shape of a pipe-like member 60. The pipe-like member 60 includes a pipe wall 60a extending parallel to the extending direction of the first flow channels 17, and a projection 60b connected to an opening on one side of the pipe wall 60a. The pipe wall 60a has an outer wall surface 60a₁ conforming to the wall surface defining the respective first flow channels 17 of the first heat bodies 7, and an inner wall surface 60a₂ with which the reaction fluid M or the product P comes into contact (refer to FIG. 6). The projection 60b projects to the outside of the outer wall surface 60a₁ of the pipe wall 60a. The projection 60b according to the present embodiment is a flange with an opening in the middle having the same shape as the cross section of the flow channel defined by the inner wall portions on all sides of the pipe wall 60a. Alternatively, the projection 60b may have a stick-like or plate-like shape projecting outward only from a part of the outer wall surface 60ai at the opening of the pipe wall 60a. The projection 60b may project outward either in a direction perpendicular to the outer wall surface 60a₁ or in a direction inclined with respect to the outer wall surface 60a₁. The projection 60b may be molded integrally with the pipe wall 60a, or may be a separated member to be joined to the pipe wall 60a by welding, for example.

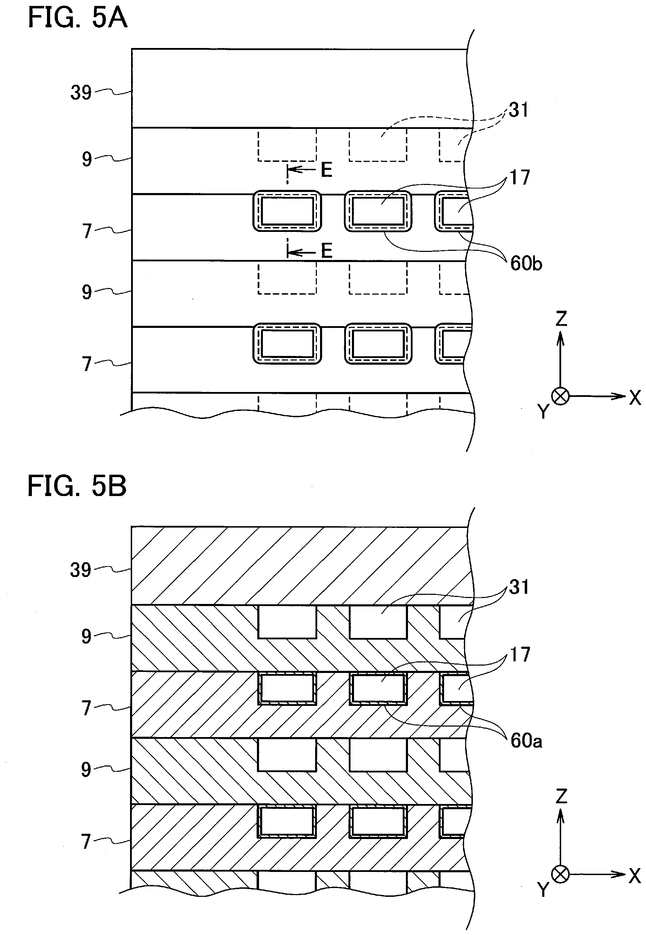

FIG. 5A is a side view corresponding to a part of a view taken along line C-C in FIG. 1 when the respective projections 60b are viewed in the Y direction, and showing a state in which the respective pipe-like members 60 are placed in the first flow channels 17. FIG. 5B is a cross-sectional view corresponding to a part of a view taken along line D-D in FIG. 1 when the respective pipe walls 60a are cross-sectioned in the direction perpendicular to the Y direction, and showing a state in which the respective pipe-like members 60 are placed in the first flow channels 17.

As described above, the first flow channels 17 each have a rectangular shape in cross section. The circumference of the pipe wall 60a also has a rectangular shape since the outer wall surface 60a₁ of the pipe wall 60a of the pipe-like member 60 conforms to the shape of the wall surface defining the first flow channels 17, namely, conforms to the cross-sectional shape of the first flow channels 17. The outer wall surface 60ai of the pipe wall 60a is preferably in contact with larger areas on all sides of the wall surface defining the respective first flow channels 17 in order to keep the heat exchange efficiency. However, a slight gap is allowed between the outer wall surface 60ai of the pipe wall 60a and the wall surface defining the respective first flow channels 17 to allow the pipe wall 60a to move therein, since the pipe-like member 60 is detachably placed in the respective first flow channels 17. When a gap is present to some extent between the wall surface defining the respective first flow channels 17 and the outer wall surface 60a₁ of the pipe wall 60a, a shim made of a heat transfer material the same as or similar to at least one of the first heat transfer body 7 and the pipe-like member 60, may be interposed therebetween. The length of the pipe wall 60a in the extending direction is only required to encompass at least the reaction regions in the first flow channels 17. In particular, when the pipe-like member 60 is placed in the first flow channel 17, the length of the pipe wall 60a in the extending direction may substantially correspond to a range from the first introduction port 20 to a part at which the first flow channel 17 communicates with the first communication flow channel 23. Although not shown, a catalyst body for promoting the reaction of the reactant may be provided inside the pipe wall 60a.

FIG. 6A to FIG. 6C are cross-sectional views each corresponding to a view taken along line E-E in FIG. 5A, and showing the projection 60b of the pipe-like member 60 in direct or indirect contact with part of the first heat transfer body 7 and the second heat transfer body 9.

FIG. 6A is a view showing a first arrangement example of the pipe-like ember 60 in the first flow channel 17. When the pipe-like member 60 is inserted from the first introduction port 20 to one first flow channel 17, a part of the surface of the projection 60b comes into contact with a side surface 7a of the first heat transfer body 7 or a side surface 9a of the second heat transfer body 9. The inserted pipe-like member 60 is thus positioned to the first flow channel 17, so as to prevent the displacement inside the first flow channel 17 during the reaction processing. In addition, the operator can easily insert or remove the pipe-like member 60 while holding the projection 60b.

FIG. 6B is a view showing a second arrangement example of the pipe-like ember 60 in the first flow channel 17. The fundamental arrangement of the pipe-like member 60 is the same as the first arrangement example. In the second arrangement example, the part of the surface of the projection 60b comes into contact with the side surface 7a of the first heat transfer body 7 or the side surface 9a of the second heat transfer body 9 via a seal member 62. The seal member 62 may be various kinds of materials, and examples thereof include elastic material such as rubber, resin material, metal material, and inorganic fiber material (for example, a non-asbestos gasket). The use of such a seal member can prevent the entrance of the reaction fluid M to the gap between the wall surface defining the first flow channel 17 and the outer wall surface 60a₁ of the pipe wall 60a.

FIG. 6C is a view showing a third arrangement example of the pipe-like ember 60 in the first flow channel 17. In the third arrangement example, the first heat transfer body 7 includes a first groove 7b for housing a part of the projection 60b. Similarly, the second heat transfer body 9 includes a second groove 9b for housing another part of the projection 60b. This structure has the advantage of avoiding blocking the flow of the reaction fluid M in the first space S1, for example, since the entire projection 60b does not project outward from the surface of the first heat transfer body 7 or the second heat transfer body 9.

The reactor 1 further includes a reaction fluid introduction part 45 and a product drain part 49, and a heat medium introduction part 53 and a heat medium drain part 57.

The reaction fluid introduction part 45 is a casing curved concavely. The reaction fluid introduction part 45 covers the side surface of the heat exchange unit 3 on the side on which the first introduction ports 20 of the first flow channels 17 are open to define the first space S1 together with the heat exchange unit 3. The reaction fluid introduction part 45 is detachable or openable with respect to the heat exchange unit 3. The detachable or openable reaction fluid introduction part 45 allows the operator to insert or remove the catalyst body into or from the respective first flow channels 17, for example. The reaction fluid introduction part 45 includes a first introduction pipe 47 from which the reaction fluid M is externally introduced to the inside of the heat exchange unit 3. The first introduction pipe 47 is located in the middle on the side surface of the heat exchange unit 3, in particular, located in the middle on the X-Z plane, and is connected to the reaction fluid introduction part 45 in the same direction as the open direction of the respective first introduction ports 20. Such a structure can distribute the reaction fluid M introduced from one portion to the respective first introduction ports 20.

The product drain part 49 is a box-shaped casing with one surface open. The product drain part 49 is arranged on a third side surface of the heat exchange unit 3 such that the open surface faces to the respective first discharge ports 21 of the first heat transfer bodies 7. The product drain part 49 includes a first drain pipe 51 at a part of the wall portion thereof for discharging the product P from the inside to the outside of the heat exchange unit 3. The first drain pipe 51 is connected to another external treatment device (not shown) for executing aftertreatment of the product P. The product P discharged from the respective first discharge ports 21 is thus recovered through the single first drain pipe 51.

The heat medium introduction part 53 is a casing curved concavely, as in the case of the reaction fluid introduction part 45. The heat medium introduction part 53 covers the side surface of the heat exchange unit 3 on the side on which the second introduction ports 30 of the second flow channels 31 are open to define the second space S2 together with the heat exchange unit 3. The heat medium introduction part 53 is detachable or openable with respect to the heat exchange unit 3. The detachable or openable heat medium introduction part 53 allows the operator to insert or remove the heat transfer promoting body into or from the respective second flow channels 31, for example. The heat medium introduction part 53 includes a second introduction pipe 55 from which the heat medium HC is externally introduced to the inside of the heat exchange unit 3. The second introduction pipe 55 is located in the middle on the side surface of the heat exchange unit 3, in particular, located in the middle on the X-Z plane, and is connected to the heat medium introduction part 53 in the same direction as the open direction of the respective second introduction ports 30. Such a structure can distribute the heat medium HC introduced from one portion to the respective second introduction ports 30.

The heat medium drain part 57 is a box-shaped casing with one surface open, as in the case of the product drain part 49. The heat medium drain part 57 is arranged on the third side surface of the heat exchange unit 3 such that the open surface faces to the respective second discharge ports 35 of the second heat transfer bodies 9. The heat medium drain part 57 includes a second drain pipe 59 at a part of the wall portion thereof for discharging the heat medium HC from the inside to the outside of the heat exchange unit 3. The second drain pipe 59 is connected to another external treatment device (not shown) for reusing the heat medium HC. The heat medium HC discharged from the respective second discharge ports 35 is thus recovered through the single second drain pipe 59.

The heat exchange body 3 may be any of a liquid-liquid heat exchanger, a gas-gas heat exchanger, and a gas-liquid heat exchanger, and the reaction fluid M and the heat medium HC supplied to the reactor 1 may be either gas or liquid. The reactor 1 can cause chemical synthesis through various kinds of thermal reactions such as an endothermic reaction and an exothermic reaction. Examples of such thermal reactions causing synthesis include: a steam reforming reaction of methane as represented by the following chemical equation (1); an endothermic reaction such as a dry reforming reaction of methane as represented by the following chemical equation (2); a shift reaction as represented by the following chemical equation (3); a methanation reaction as represented by the following chemical equation (4); and a Fischer Tropsch synthesis reaction as represented by the following chemical equation (5). The reaction fluid M used in these reactions is in a gas state.

CH₄ + H₂O → 3H₂ + CO ... (1)

CH₄ + CO₂ → 2H₂ + 2CO ... (2)

CO + H₂O → CO₂ + H₂ ... (3)

CO + 3H₂ → CH₄ + H₂O ... (4)

(2n + 1)H₂ + nCO → CnH₂ₙ₊₂ + nH₂O ... (5)

The heat medium HC is preferably a fluid substance not corroding the constituent materials of the reactor 1, and may be a liquid substance such as water or oil, or a gaseous substance such as heating air or combustion gas. The gaseous substance used as the heat medium HC is easier to handle than the liquid medium.

Next, the effects of the present embodiment are described below. According to the present embodiment, the pipe-like members 60 are placed in the first flow channels 17 through which the reaction fluid M or the product P flows. Hereinafter, the effects in the present embodiment are illustrated with a case in which several main materials are used for the first heat transfer bodies 7 including the first flow channels 17 and the second heat transfer bodies 9, and for the pipe-like members 60.

First, a case in which the first heat transfer bodies 7, the second heat transfer bodies 9, and the pipe-like members 60 are made of the same material is described below. The material used for the respective members is presumed to be stainless steel. Typically, stainless steel has high corrosion resistance. However, when the first heat transfer bodies 7 include the first flow channels 17 particularly used for a long period of time in a high temperature atmosphere in which the reaction fluid M or the product P keeps flowing, a margin of oxidative corrosion needs to be provided in the first flow channels 17.

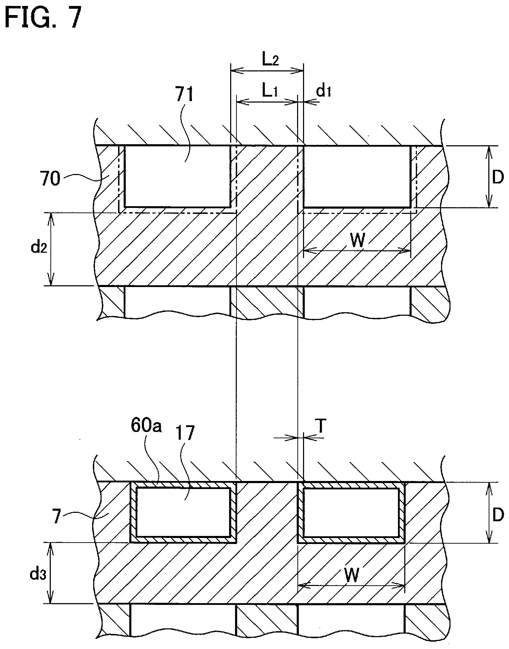

FIG. 7 is a schematic view for illustrating the operations and effects when the pipe-like members 60 presumed to be made of the same material as the first heat transfer bodies 7 and the second heat transfer bodies 9 are used. The upper part of FIG. 7 is a cross-sectional view of a comparative example showing a third heat transfer body 70 and third flow channels 71 provided in the third heat transfer body 70 without the pipe-like members 60 employed. The third heat transfer body 70 corresponds to the first heat transfer body 7 according to the present embodiment, and the third flow channels 71 correspond to the first flow channels 17 according to the present embodiment. The lower part of FIG. 7 is a cross-sectional view showing the first heat transfer body 7 and the first flow channels 17 provided in the first heat transfer body 7 with the pipe-like members 60 employed. The first flow channels 17 and the third flow channels 71 have the same dimensions of a width W × a height D in cross section. The thickness of the respective parts of each heat transfer body is typically determined to be {a sufficient thickness in view of the structure + a margin of corrosion sufficient for a duration of life of the channels} in order to ensure sufficient strength when the device is used at the point when the duration of life ends. In view of this, the thickness between the adjacent two flow channels, which is the thickness of the width of the respective first interposition walls 15 shown in FIG. 2 sufficient for the structure, is presumed to be five millimeters (mm). The duration of life of the channels is presumed to be 15 years.

Referring to the upper part of FIG. 7, the thickness L₁ sufficient for the structure between the adjacent two third flow channels 71 is 5 mm. When a margin of corrosion for a year is presumed to be 0.04 mm, the margin d₁ of corrosion required for the duration of life of 15 years on one surface is 0.6 mm. Thus, at least {L₁ + d₁ × 2} = 6.2 mm are required for the thickness L₂ between the adjacent two third flow channels 71 at the point of manufacture. The distance d₂ to the second heat transfer body 9 below the third flow channels 71 with the margin d₁ of corrosion removed is substantially the same as the thickness L₂.

Referring to the lower part of FIG. 7, according to the present embodiment, since the reaction fluid M or the product P does not come into contact with the first heat transfer body 7 or the second heat transfer body 9, the first heat transfer body 7 does not need to be provided with a margin of corrosion described above. The thickness between the adjacent two first flow channels 17 at the point of manufacture is thus the direct thickness L₁ between the adjacent two first flow channels 17 sufficient for the structure. When the frequency of change of the pipe-like member 60 in contact with the reaction fluid M or the product HC is presumed to be once for three years in association with the change of the catalyst, for example, the thickness T of the pipe-like member 60 can be set to 0.15 mm (> 0.04 mm × three years). The distance between the adjacent two first flow channels 17 thus results in 5.3 mm to which a thickness twice the thickness T of the pipe-like member 60 is added. The distance d₃ to the second heat transfer body 9 below the first flow channels 17 with the thickness T of the pipe-like member 60 removed is substantially the same as the thickness L₁.

When the dimensions of the first heat transfer body 7 can be defined as described above, the dimensions of the second heat transfer body 9 stacked on the first heat transfer body 7 can conform thereto. Accordingly, the use of the pipe-like members 60 contributes to reducing the size of the entire heat transfer bodies including the first heat transfer bodies 7 and the second heat transfer bodies 9, as shown in FIG. 7, as compared with the case of not using the pipe-like members 60. More particularly, the example in which the respective values are defined as described above can reduce the entire amount of the materials used for the respective heat transfer bodies by about 15%.

Second, a case in which the first heat transfer bodies 7 and the second heat transfer bodies 9 are made of stainless steel, and the pipe-like members 60 are made of a steel material having higher corrosion resistance than stainless steel, is described below. When the reaction fluid M or the product P has high corrosiveness while the pipe-like members 60 are not used, the heat transfer bodies need to be made of a steel material having high corrosion resistance, or the wall surfaces of the flow channels in contact with the reaction fluid M or the product P need to be subjected to corrosion-resistant treatment. In contrast, since the present embodiment uses the pipe-like members 60, and the only the pipe-like members 60 need to be made of a steel material having high corrosion resistance necessary under the corresponding pressure and temperature conditions, the amount of high-cost material used can be decreased, reducing the total production costs of the reactor 1.

Third, a case in which the first heat transfer bodies 7 and the second heat transfer bodies 9 are made of stainless steel, and the pipe-like member 60 are made of a steel material having lower corrosion resistance than stainless steel, is described below. The steel material having low corrosion resistance is less expensive than common stainless steel. When the steel material having low corrosion resistance is presumed to be corroded twice as quick as stainless steel, the thickness T of the pipe-like members 60 is increased twice, so that the frequency of change of the pipe-like member 60 can be once for three years, as in the case described above. The use of such low-cost material for the pipe-like members 60 can also reduce the total production costs of the reactor 1 when the pipe-like members 60 may have any dimensions.

The advantageous effects according to the present embodiment are described below.

The heat treatment device corresponding to the reactor 1 described above utilizing the heat exchange between the first fluid and the second fluid, includes the heat transfer bodies 7 and 9 including the first flow channels 17 through which the first fluid flows and the second flow channels 31 through which the second fluid flows adjacent to the first flow channels 17 without contact. The heat treatment device includes the pipe-like members 60 detachably placed in the first flow channels 17 and each including the pipe wall 60a having the outer wall surface 60a₁ conforming to the wall surface defining the respective first flow channels 17 and the inner wall surface 60a₂ with which the first fluid comes into contact.

The heat treatment device according to the present embodiment is provided with a margin of corrosion presumed to be needed due to the first fluid having high corrosiveness, not on the heat transfer bodies 7 and 9 but on the pipe-like members 60, while the heat transfer bodies 7 and 9 are preliminarily designed to have a sufficient thickness. The pipe-like members 60 can be replaced as necessary. Thus, an increase in thickness between the respective flow channels can be minimized. The prevention of the increase in thickness between the respective flow channels can particularly decrease the size of the heat transfer bodies 7 and 9 to decrease the material costs, and accordingly, can decrease the entire costs of the heat treatment device. The prevention of the increase in thickness between the respective flow channels shortens the distance between the respective flow channels in which the heat exchange is performed, so as to avoid a decrease in heat exchange performance accordingly.

The pipe-like members 60 in the heat treatment device according to the present embodiment each include the projection 60b projecting to the outside of the outer wall surface 60a₁ of the pipe wall 60a and connected to the opening on one side of the pipe wall 60a.

According to the heat treatment device of the present embodiment, since the part of the surface of the projection 60b comes into contact with the side surface 7a or 9a of the heat transfer body 7 or 9, the pipe-like member 60 is positioned to the first flow channel 17, for example, preventing the displacement inside the first flow channel 17 during the reaction processing. In addition, the operator can hold the projection 60b to facilitate the insertion or removal of the pipe-like member 60.

The heat treatment device according to the present embodiment uses the seal member 62 for sealing a gap between the projection 60b and the heat transfer body 7 or 9 when the pipe-like member 60 is placed in the first flow channel 17.

The heat treatment device according to the present embodiment can prevent the first fluid from flowing into a gap between the wall surface defining the first flow channel 17 and the outer wall surface 60a₁ of the pipe wall 60a, for example.

The heat transfer bodies 7 and 9 in the heat treatment device according to the present embodiment include the grooves 7b and 9b for housing the projections 60b when the pipe-like members 60 are placed in the first flow channels 17.

The heat treatment device according to the present embodiment has the advantage of avoiding blocking the flow of the first fluid in the first space S1, for example, since the entire projection 60b does not project outward from the side surfaces 7a and 9a of the heat transfer bodies 7 and 9.

### (Other embodiments)

The above embodiment has been illustrated with the case of the two kinds of heat transfer bodies composing the heat exchange unit 3, including the first heat transfer bodies 7 each including the first flow channels 17 through which the first fluid flows, and the second heat transfer bodies 9 each including the second flow channels 31 through which the second fluid flows. The present disclosure is not limited to the heat exchange unit 3 having such a configuration. For example, the present disclosure may be applicable to a case in which the heat exchange unit 3 includes one kind of heat transfer bodies each including both of the first flow channels through which the first fluid flow and the second flow channels through which the second fluid flows. This configuration can reduce the thickness between the first flow channel and the second flow channel adjacent to the first flow channel without contact in the same heat transfer body, as compared with the case of not employing the pipe-like members 60, so as to achieve the same effects as the embodiment described above.

The above embodiment has been illustrated with the case in which the first flow channels 17 have a rectangular shape in cross section. The present disclosure is not limited to this case, and the first flow channels 17 may have a circular shape in cross section. In this case, the circumference of the pipe wall 60a also has a circular shape so that the outer wall surface 60a₁ of the pipe wall 60a of the pipe-like member 60 conforms to the shape of the wall surface defining the first flow channels 17.

The above embodiment has been illustrated with the case in which the heat exchange unit 3 has a counter flow-type structure in which the first fluid flows in the first flow channels 17 in the direction opposite to the flowing direction of the second fluid flowing in the second flow channels 31, but the heat exchange unit 3 may have a parallel flow-type structure in which the respective fluids flow in the same direction. The present disclosure thus can be applicable to any case in which the first fluid and the second fluid flow in either direction.

The above embodiment has been illustrated with the case in which the first heat transfer bodies 7 and the second heat transfer bodies 9 composing the heat exchange unit 3 are alternately stacked on one another in the Z direction which is the vertical direction, but the present disclosure is not limited to this case. For example, several sets of the respective heat transfer bodies composing the heat exchange unit 3 transversely connected to each other may be stacked in the Z direction.

It should be understood that the present disclosure includes various embodiments which are not disclosed herein. Therefore, the scope of the present disclosure is defined only by the matters according to the claims reasonably derived from the description above.

## Claims

1. A heat treatment device causing a first fluid and a second fluid to flow therethrough, the device comprising:
a heat transfer body including a first flow channel through which the first fluid flows and a second flow channel through which the second fluid flows adjacent to the first flow channel without contact; and
a pipe-like member detachably placed in the first flow channel, and including a pipe wall having an outer wall surface conforming to a wall surface defining the first flow channel and an inner wall surface with which the first fluid comes into contact.

2. The heat treatment device according to claim 1, wherein the pipe-like member includes a projection projecting to an outside of the outer wall surface of the pipe wall at an opening on one side of the pipe-like member.

3. The heat treatment device according to claim 2, wherein the pipe-like member is provided with a seal member for sealing a gap between the projection and the heat transfer body when the pipe-like member is placed in the first flow channel.

4. The heat treatment device according to claim 2 or 3, wherein the heat transfer body includes a groove for housing the projection when the pipe-like member is placed in the first flow channel.
